(19) Europäisches Patentamt
European Patent Office
Office européen des brevets

(11) EP 1 376 732 A1

(12) **EUROPEAN PATENT APPLICATION**
published in accordance with Art. 158(3) EPC

(43) Date of publication:
**02.01.2004 Bulletin 2004/01**

(21) Application number: **02708692.5**

(22) Date of filing: **27.03.2002**

(51) Int Cl.[7]: **H01M 10/40**, H01G 9/038

(86) International application number:
**PCT/JP2002/003010**

(87) International publication number:
**WO 2002/082575 (17.10.2002 Gazette 2002/42)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **30.03.2001 JP 2001098729**
**30.03.2001 JP 2001098730**
**25.10.2001 JP 2001327617**

(71) Applicant: **Bridgestone Corporation**
**Tokyo 104-8340 (JP)**

(72) Inventors:
- **OTSUKI, Masashi**
**Musashimurayama-shi, Tokyo 208-0001 (JP)**
- **ENDO, Shigeki**
**Tokorozawa-shi, Saitama 359-0024 (JP)**
- **OGINO, Takao**
**Tokorozawa-shi, Saitama 359-1116 (JP)**

(74) Representative: **Whalley, Kevin**
**MARKS & CLERK,**
**57-60 Lincoln's Inn Fields**
**London WC2A 3LS (GB)**

(54) **ADDITIVE FOR CELL AND ELECTRIC DOUBLE-LAYERED CAPACITOR**

(57) The invention provides additives capable of fabricating a battery having an excellent combustion inhibiting effect, a low interfacial resistance of an electrolyte and excellent low-temperature discharging property and high-temperature storing property by adding to the electrolyte for the battery to maintain properties required as the battery and capable of fabricating an electrolyte electric double-layered capacitor having an excellent combustion inhibiting effect, a low interfacial resistance of an electrolyte and an excellent low-temperature discharging property by adding to the electrolyte for the electric double-layered capacitor to maintain sufficient electric properties such as electric conductivity and the like as well as a battery and an electric double-layered capacitor.

The additive for the battery and the electric double-layered capacitor is characterized by containing a combustion inhibiting substance releasing compound which releases a combustion inhibiting substance during combustion. Also, the battery or the electric double-layered capacitor is characterized by comprising a positive electrode, a negative electrode and an electrolyte containing the additive for the battery and the electric double-layered capacitor and support salt.



Printed by Jouve, 75001 PARIS (FR)

## Description

### TECHNICAL FIELD

This invention relates to an additive for a battery and an electrolyte electric double-layered capacitor having an excellent combustion inhibiting effect.

### BACKGROUND ART

Heretofore, nickel-cadmium batteries were particularly the main current as a secondary cell for backing up memories in AV-information equipments such as personal computers, VTR and the like or a power source for driving them. Recently, non-aqueous electrolyte secondary cells are considerably noticed instead of the nickel-cadmium battery because they are high in the voltage and have a high energy density and develop an excellent self-discharge characteristic, and hence various developments are attempted and a part thereof is commercialized. For example, a greater number of note-type personal computers, mobile phones and so on are driven by such a non-aqueous electrolyte secondary cell.

In the non-aqueous electrolyte secondary cell, since carbon is frequently used as a material forming a negative electrode, various organic solvents are used as an electrolyte for the purpose of reducing a risk when lithium is produced on the surface and rendering a driving voltage into a higher level. Also, since an alkali metal or the like (particularly, lithium metal or lithium alloy) is used as a negative electrode in the non-aqueous electrolytic secondary cell for a camera, an aprotic organic solvent such as ester type organic solvent or the like is usually used as an electrolyte.

However, the non-aqueous electrolyte secondary cells have the following problems as to the safety though the performance is high.

Firstly, when the alkali metal (particularly lithium metal, lithium alloy or the like) is used as the negative electrode in the non-aqueous electrolyte secondary cell, since the alkali metal is very high in the activity to water content, there is a problem that if water is penetrated into the cell due to incomplete sealing or the like thereof, risks of generating hydrogen by reacting the material of the negative electrode with water, ignition and the like become high.

Also, since the lithium metal is low in the melting point (about 170°C), there is a problem that if a large current violently flows in short-circuiting or the like, there is caused a very risky state that the cell abnormally generates heat to cause the fusion of the cell or the like.

Further, there is a problem that the electrolyte based on the above organic solvent is vaporized or decomposed accompanied with the heat generation of the cell to generate a gas or the fracture-ignition of the cell is caused by the generated gas.

In order to solve the above problems, there is proposed a technique that a cylindrical battery is provided with such a mechanism that when a temperature rises in the short-circuiting and overcharging of the cylindrical battery to increase a pressure inside the battery, a safety valve is actuated and at the same time a terminal of the electrode is broken to control the flowing of excess current of not less than a given quantity into the battery (Nikkan Kogyo Shinbunsha, "Electron Technology", 1997, vol. 39, No. 9).

However, it is not reliable that the above mechanism is always and normally operated. If the mechanism is not normally operated, there is remained a problem that the heat generation due to the excess current becomes large to fear a risky state of ignition or the like.

In order to solve the aforementioned problems, therefore, it is required to develop a non-aqueous electrolyte secondary cell fundamentally having a high safety instead of the safety countermeasure of arranging additional parts such as safety valve and the like as mentioned above.

On the other hand, the electrolyte electric double-layered capacitor is a condenser utilizing an electric double layer formed between an electrode and an electrolyte, which has been developed in the 1970s and was incunabula in the 1980s and developed growth from the 1990s. It is used in not only back-up power supply, auxiliary power supply or the like but also various energy storages.

Such an electrolyte electric double-layered capacitor, in which a cycle of electrically adsorbing an ion from the electrolyte on a surface of the electrode is a discharge-recharge cycle, is different from a battery in which a cycle of oxidation-reduction reaction accompanied with mass transfer is a discharge-recharge cycle. For this end, the electrolyte electric double-layered capacitor is superior in the instant discharge-recharge cycling property to the battery, and also the instant discharge-recharge cycling property hardly deteriorates even in the repetition of the discharge-recharge cycling. In the electrolyte electric double-layered capacitor, excess voltage is not generated in the discharge-recharge cycling, so that it is sufficient to render into a simple and cheap electric circuit. Further, this capacitor has many merits that the remaining capacity is easily clear and the durability on temperature develops under a condition of a wide temperature range of -30 to 90°C and the pollution is free and the like as compared with the battery, so that it is recently highlighted as a new energy-storing product suitable for global environment.

The electrolyte electric double-layered capacitor is an energy-storing device comprising positive and negative electrodes and an electrolyte, in which an electric double layer is formed by orienting positive and negative charges at a very short distance to each other in a contact face between the electrode and the electrolyte. Since the electrolyte plays a role as an ion source for forming the electric double layer, it is an important substance depending the basic characteristics of the energy-storing device.

As the electrolyte have hitherto been known an aqueous electrolyte, a non-aqueous electrolyte, a solid electrolyte and so on. From a viewpoint that the energy density is improved in the non-aqueous electrolyte electric double-layered capacitor, the non-aqueous electrolyte capable of setting a high operating voltage is particularly highlighted and the practical application thereof is increasing. As the non-aqueous electrolyte are now practiced non-aqueous electrolytes obtained by dissolving a solute (support salt) such as $(C_2H_5)_4P\cdot BF4$, $(C_2H_5)_4N\cdot BF_4$ or the like into an organic solvent having a high dielectric constant such as a carbonate (ethylene carbonate, propylene carbonate or the like), gamma-butyrolactone or the like.

In these non-aqueous electrolytes, however, since the flash point of the solvent is low, if the non-aqueous electrolyte electric double-layered capacitor is ignited by heat generation or the like, the electrolyte is flashed to spread a flame on the surface of the electrolyte, so that there is a problem that the risk becomes high.

Also, there is a problem that the non-aqueous electrolyte based on the above organic solvent is vaporized or decomposed accompanied with the heat generation of the non-aqueous electrolyte electric double-layered to generate a gas, or the non-aqueous electrolyte electric double-layered capacitor is fractured or ignited by the resulting gas to thereby flash the non-aqueous electrolyte to spread the flam on the surface of the electrolyte, so that there is a problem that the risk becomes high.

Lately, it is expected to develop the application of the non-aqueous electrolyte electric double-layered capacitor to electric cars, hybrid cars and the like based on the practical use of the non-aqueous electrolyte electric double-layered capacitor, and hence the demand on the safety of the non-aqueous electrolyte electric double-layered capacitor is increasing day by day. Therefore, it is continuing required to have safeties such as property of hardly spreading flame, fire retardance, self-extinguishing property and the like when fire source is created by the ignition in addition to the risks such as vaporization, decomposition, ignition of the non-aqueous electrolyte and the like.

## DISCLOSURE OF THE INVENTION

The invention is to solve the above problems of the conventional techniques to achieve the following objects. That is, it is an object of the invention to provide an additive for a battery capable of fabricating a battery having an excellent combustion inhibiting effect, a low interfacial resistance of an electrolyte and excellent low-temperature discharging property and high-temperature storing property by adding to the electrolyte for the battery to maintain properties required as the battery as well as a battery containing the additive for the battery and having an excellent combustion inhibiting effect, a low interfacial resistance of an electrolyte and excellent low-temperature discharging property and high-temperature storing property.

It is another object of the invention to provide an additive for an electrolyte electric double-layered capacitor capable of fabricating an electrolyte electric double-layered capacitor having an excellent combustion inhibiting effect, a low interfacial resistance of an electrolyte and an excellent low-temperature discharging property by adding to the electrolyte for the electric double-layered capacitor to maintain sufficient electric properties such as electric conductivity and the like as well as an electric double-layered capacitor containing the additive for the electric double-layered capacitor and having an excellent combustion inhibiting effect, a low interfacial resistance of an electrolyte and an excellent low-temperature discharging property.

Means for achieving the above objects are as follows.

<1> An additive for a battery characterized by containing a combustion inhibiting substance releasing compound which releases a combustion inhibiting substance during combustion.

<2> An additive for a battery according to the item <1>, wherein the combustion inhibiting substance is at least one of a self-extinguishing substance, a flame-retardant substance and a non-combustible substance.

<3> An additive for a battery according to the item <1> or <2>, wherein the combustion inhibiting substance is a phosphoric ester.

<4> An additive for a battery according to any one of the items <1> to <3>, wherein the combustion inhibiting substance releasing compound is at least one of a homocyclic phosphorus compound, a heterocyclic phosphorus compound, a homo-chain phosphorus compound and a hetero-chain phosphorus compound, each containing a phosphorus atom.

<5> An additive for a battery according to any one of the items <1> to <4>, wherein the combustion inhibiting substance releasing compound is at least one homocyclic phosphorus compound selected from alkoxy cyclophosphine derivatives, trialkoxy cyclophosphine derivatives and alkoxy cyclophosphine oxide derivatives.

<6> An additive for a battery according to any one of the items <1> to <4>, wherein the combustion inhibiting substance releasing compound is a cyclic phosphazene derivative.

<7> An additive for a battery according to any one of the items <1> to <4>, wherein the combustion inhibiting substance releasing compound is at least one homo-chain phosphorus compound selected from dialkoxy phosphine derivatives and trialkoxy phosphine derivatives.

<8> An additive for a battery according to any one of the items <1> to <4>, wherein the combustion inhibiting substance releasing compound is at least one hetero-chain phosphorus compound selected from alkoxy diphosphinoborane derivatives, alkoxysilaphosphane derivatives, alkoxyphosphoarsenic cyclosilazane derivatives, alkoxyphosphoxide borane derivatives, p-dialkoxyphosphine borane derivatives, p-trialkoxyphosphine borane derivatives and chain phosphazene derivatives.

<9> An additive for a battery according to any one of the items <1> to <8>, wherein the combustion inhibiting substance releasing compound is a compound having a halogen atom(s) in its molecule.

<10> An additive for a battery according to the item <9>, wherein a content of the halogen atom(s) in the combustion inhibiting substance releasing compound is 2-80% by weight.

<11> A battery comprising a positive electrode, a negative electrode and an electrolyte containing an additive for a battery as described in any one of the items <1> to <10> and a support salt.

<12> A battery according to the item <10>, wherein the electrolyte releases at least 0.03 (mol/1 kg of electrolyte) of a combustion inhibiting substance during combustion.

<13> A battery according to the item <11> or <12>, wherein the electrolyte contains at least 20% by volume of a combustion inhibiting substance releasing compound.

<14> A battery according to any one of the items <11> to <13>, wherein the electrolyte contains at least 30% by volume of a combustion inhibiting substance releasing compound.

<15> A battery according to any one of the items <11> to <14>, wherein the electrolyte contains an aprotic organic solvent.

<16> A battery according to the item <15>, wherein the aprotic organic solvent is a cyclic or chain ester compound, or a chain ether compound.

<17> A battery according to any one of the items <11> to <16>, comprising a positive electrode, a negative electrode and an electrolyte containing at least one of $LiPF_6$, ethylene carbonate and propylene carbonate and more than 2.5% by volume of a combustion inhibiting substance releasing compound.

<18> A battery according to any one of the items <11> to <16>, comprising a positive electrode, a negative electrode and an electrolyte containing at least one of $LiPF_6$, ethylene carbonate and propylene carbonate and 1.5-2.5% by volume of a combustion inhibiting substance releasing compound.

<19> A battery according to any one of the items <11> to <18>, wherein the electrolyte is a non-aqueous electrolyte.

<20> An additive for an electric double-layered capacitor characterized by containing a combustion inhibiting substance releasing compound which releases a combustion inhibiting substance during combustion.

<21> An additive for an electric double-layered capacitor according to the item <20>, wherein the combustion inhibiting substance is at least one of a self-extinguishing substance, a flame-retardant substance and a non-combustible substance.

<22> An additive for an electric double-layered capacitor according to the item <20> or <21>, wherein the combustion inhibiting substance is a phosphoric ester.

<23> An additive for an electric double-layered capacitor according to any one of the items <20> to <22>, wherein the combustion inhibiting substance releasing compound is at least one of a homocyclic phosphorus compound, a heterocyclic phosphorus compound, a homo-chain phosphorus compound and a hetero-chain phosphorus compound, each containing a phosphorus atom.

<24> An additive for an electric double-layered capacitor according to any one of the items <20> to <23>, wherein the combustion inhibiting substance releasing compound is at least one homocyclic phosphorus compound selected from alkoxy cyclophosphine derivatives, trialkoxy cyclophosphine derivatives and alkoxy cyclophosphine oxide derivatives.

<25> An additive for an electric double-layered capacitor according to any one of the items <20> to <23>, wherein the combustion inhibiting substance releasing compound is a cyclic phosphazene derivative.

<26> An additive for an electric double-layered capacitor according to any one of the items <20> to <23>, wherein the combustion inhibiting substance releasing compound is at least one homo-chain phosphorus compound selected from dialkoxy phosphine derivatives and trialkoxy phosphine derivatives.

<27> An additive for an electric double-layered capacitor according to any one of the items <20> to <23>, wherein the combustion inhibiting substance releasing compound is at least one hetero-chain phosphorus compound selected from alkoxy diphosphinoborane derivatives, alkoxysilaphosphane derivatives, alkoxyphosphoarsenic cyclosilazane derivatives, alkoxyphosphoxide borane derivatives, p-dialkoxyphosphine borane derivatives, p-trialkoxyphosphine borane derivatives and chain phosphazene derivatives.

<28> An additive for an electric double-layered capacitor according to any one of the items <20> to <27>, wherein the combustion inhibiting substance releasing compound is a compound having a halogen atom(s) in its molecule.
<29> An additive for an electric double-layered capacitor according to the item <28>, wherein a content of the halogen atom(s) in the combustion inhibiting substance releasing compound is 2-80% by weight.
<30> An electric double-layered capacitor comprising a positive electrode, a negative electrode and an electrolyte containing an additive for a battery as described in any one of the items <20> to <29> and a support salt.
<31> An electric double-layered capacitor according to the item <30>, wherein the electrolyte releases at least 0.03 (mol/1 kg of electrolyte) of a combustion inhibiting substance during combustion.
<32> An electric double-layered capacitor according to the item <30> or <31>, wherein the electrolyte contains at least 20% by volume of a combustion inhibiting substance releasing compound.
<33> An electric double-layered capacitor according to any one of the items <30> to <32>, wherein the electrolyte contains at least 30% by volume of a combustion inhibiting substance releasing compound.
<34> An electric double-layered capacitor according to any one of the items <30> to <33>, wherein the electrolyte contains an aprotic organic solvent.
<35> An electric double-layered capacitor according to the item <34>, wherein the aprotic organic solvent is a cyclic or chain ester compound, or a chain ether compound.
<36> An electric double-layered capacitor according to any one of the items <30> to <35>, comprising a positive electrode, a negative electrode and an electrolyte containing propylene carbonate and at least 3% by volume of a combustion inhibiting substance releasing compound.

## BEST MODE FOR CARRYING OUT THE INVENTION

The additives for a battery and an electric double-layered capacitor as well as the battery and the electric double-layered capacitor according to the invention will be described in detail below.

[Additive for battery and electric double-layered capacitor]

The additive for the battery and electric double-layered capacitor according to the invention (which may be called as additive for battery or additive for electric double-layered capacitor hereinafter) contains a combustion inhibiting substance releasing compound and may contain other components, if necessary.

- Combustion inhibiting substance releasing compound-

The additive for the battery and the electric double-layered capacitor is necessary to contain a combustion inhibiting substance releasing compound which releases a combustion inhibiting substance during combustion from reasons as mentioned later.
Heretofore, the electrolyte used in the battery or the electric double-layered capacitor is high in the risk because if a large current is rapidly flowed in the short-circuiting or the like to abnormally generate heat in the battery or the electric double-layered capacitor, a gas is generated by vaporization or decomposition, or the battery or the electric double-layered capacitor is fractured or ignited by the generated gas or heat and may combust.
On the contrary, when the additive containing the combustion inhibiting substance releasing compound is added to the electrolyte, the combustion inhibiting substance is released during combustion to advantageously inhibit the combustion and hence the electrolyte can develop an excellent combustion inhibiting effect and it is possible to reduce the above risk.
The combustion inhibiting substance is not particularly limited unless it has a property capable of inhibiting the combustion of a flame ignited on the electrolyte during combustion, but it is preferable to be at least one of a self-extinguishing substance, a flame-retardant substance and a non-combustible substance because they preferably inhibit the combustion and the electrolyte can develop an excellent combustion inhibiting effect.
Moreover, the term "self-extinguishing property" used herein means a property that the ignited flame extinguishes at a line of 25-100 mm and the ignition is not observed in a falling object according to the following evaluation method. The term "flame retardance" means a property that the ignited flame does not arrive at a line of 25 mm and the ignition is not observed in the falling object according to the following evaluation method. The term "non-combustibility" means a property that no ignition is caused even by adding a flame according to the following evaluation method, i.e. a property that a test flame does not ignite a test piece (combustion length: 0 mm). On the other hand, the term "combustion property" means a property that the ignited flame exceeds a line of 100 mm according to the following evaluation method.

<Evaluation Method>

The self-extinguishing property, flame retardance and non-combustibility are evaluated by measuring a combustion behavior of a test flame ignited under an atmospheric environment according to a method arranging UL94HB method of UL (Underwriting Laboratory) standard. In this case, the ignitability, combustibility, carbide formation and phenomenon in secondary ignition are also observed. Concretely, a test piece of 127 mm $\times$ 12.7 mm is prepared by penetrating 1.0 ml of each of various electrolytes into a non-combustible quartz fiber based on UL test standard.

As the combustion inhibiting substance, a phosphoric ester is preferable. Since phosphorus acts to suppress chain decomposition of a high polymer material constituting the battery or the capacitor, the heat generation due to the chain decomposition can be suppressed and particularly the combustion inhibiting effect can be effectively given to the electrolyte.

In the phosphoric ester, all of the ester groups may be, for example, the same or different ester groups. Further, a part or a whole of the ester groups may be substituted with a halogen atom such as fluorine or the like. These phosphoric esters may be released as a liquid or as a gas.

The combustion inhibiting substance releasing compound releases the above combustion inhibiting substance during combustion. Moreover, the term "during combustion" means a time that the electrolyte is ignited with a flame. The combustion inhibiting substance releasing compound is preferable to be at least one of a homocyclic phosphorus compound, a heterocyclic phosphorus compound, a homo-chain phosphorus compound and a hetero-chain phosphorus compound, each containing a phosphorus atom, because they can advantageously release the combustion inhibiting substance.

As the homocyclic phosphorus compound containing a phosphorus atom is mentioned at least one of an alkoxy cyclophosphine represented by the following general formula (1), a trialkoxy cyclophosphine represented by the following general formula (2) and an alkoxy cyclophosphine oxide represented by the following general formula (3):

$$(P^{III}OR)_n \qquad (1)$$

(wherein R is a monovalent group such as an alkyl group or the like, and n is an integer of 3 to 15);

$$[P^{V}(OR)_3]_n \qquad (2)$$

(wherein R is a monovalent group such as an alkyl group or the like, and n is an integer of 3 to 15);

$$[P^{V}(X)OR]_n \qquad (3)$$

(wherein R is a monovalent group such as an alkyl group or the like, X is an atom such as O, S or the like, and n is an integer of 3 to 15).

As the heterocyclic phosphorus compound containing a phosphorus atom is mentioned a cyclic phosphazene represented by the following general formula (4):

$$(PNR^4{}_2)_n \qquad (4)$$

(wherein $R^4$ is a monovalent group or a halogen atom, and n is an integer of 3 to 15).

As the homo-chain phosphorus compound containing a phosphorus atom is mentioned at least one of a trialkoxy phosphine represented by the following general formula (5) and a dialkoxy phosphine represented by the following general formula (6):

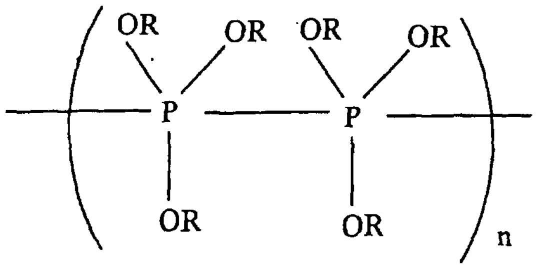

· · · · · (5)

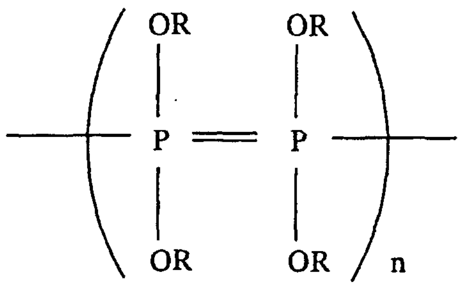

· · · · · (6)

In the general formulae (5) and (6), R is an alkyl group, and n is an integer of 3 to 8.

As the hetero-chain phosphorus compound containing a phosphorus atom is mentioned at least one of an alkoxy diphosphinoborane represented by the following general formula (7), an alkoxy silaphosphane represented by the following general formula (8), an alkoxy phosphoarsenic cyclosilazane represented by the following general formula (9), an alkoxy phosphoxide borane represented by the following general formula (10), a p-dialkoxy phosphine borane represented by the following general formula (11), a p-trialkoxy phosphine borane represented by the following general formula (12) and a chain phosphazene represented by the following general formula (13):

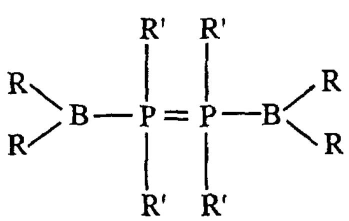

or

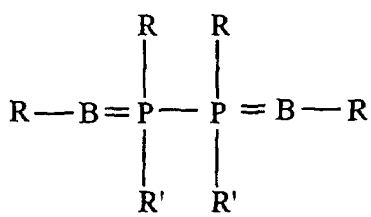

· · · · · (7)

(wherein R and R' are a monovalent group such as alkyl group, alkoxy group or the like or a halogen atom provided that R and R' may be same or different. As the halogen atom are mentioned bromine, chlorine, fluorine and the like, and among them, fluorine is particularly preferable.);

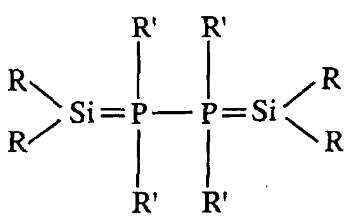

· · · · · (8)

(wherein R and R' are a monovalent group such as alkyl group, alkoxy group or the like or a halogen atom provided that R and R' may be same or different. As the halogen atom are mentioned bromine, chlorine, fluorine and the like, and among them, fluorine is particularly preferable.);

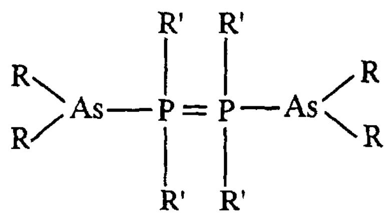

or

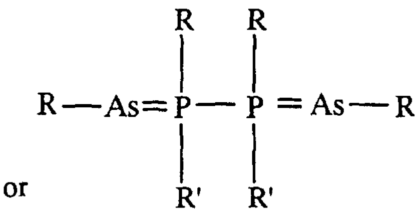

····· (9)

(wherein R and R' are a monovalent group such as alkyl group, alkoxy group or the like or a halogen atom provided that R and R' may be same or different. As the halogen atom are mentioned bromine, chlorine, fluorine and the like, and among them, fluorine is particularly preferable.);

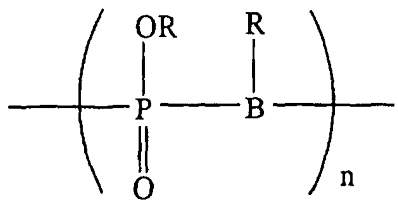

····· (10)

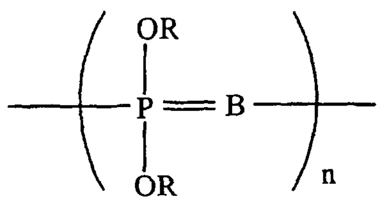

····· (11)

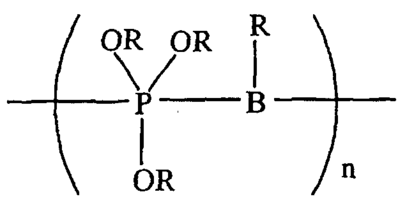

····· (12)

provided that in the general formulae (10)-(12), R is a monovalent group such as alkyl group or the like, and n is an integer of 1 to 8;

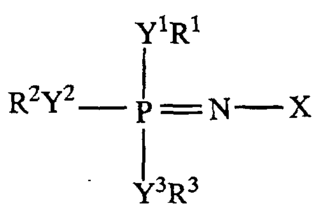

····· (13)

(wherein $R^1$, $R^2$ and $R^3$ are a monovalent group or a halogen atom, and X is a group containing at least one atom selected from the group consisting of carbon, silicon, germanium, tin, nitrogen, phosphorus, arsenic, antimony, bismuth, oxygen, sulfur, selenium, tellurium and polonium, and $Y^1$, $Y^2$ and $Y^3$ are a bivalent connecting group, a bivalent atom or a single bond).

As the combustion inhibiting substance releasing compound, the phosphazene derivative or the like is preferable because it can advantageously release the phosphoric ester.

As the combustion inhibiting substance releasing compound, a compound having a halogen atom(s) in its molecule is preferable, and concretely a compound directly bonded with a halogen atom or a compound in which a hydrogen atom(s) in the above monovalent group is substituted with a halogen atom(s) is preferable. When the halogen atom(s) is included in the molecule of the compound, it is possible to more effectively develop the combustion inhibiting effect of the electrolyte by a halogen gas deduced from the combustion inhibiting substance releasing compound.

In the compound having a group substituted with the halogen atom(s), the occurrence of halogen radical may come problem. In the above combustion inhibiting substance releasing compound, however, phosphorus atom in the molecule catches the halogen radical to form a stable phosphorus halide, so that the above problem is not caused.

The content of halogen atom(s) in the combustion inhibiting substance releasing compound is preferably 2-80% by weight, more preferably 2-60% by weight, and particularly 2-50% by weight. When the content is less than 2% by weight, the effect by including the halogen atom is not sufficiently developed, while when it exceeds 80% by weight, the viscosity becomes higher and the electric conductivity of the electrolyte may lower. As the halogen atom, fluorine, chlorine, bromine and the like are preferable, and particularly fluorine is preferable.

--Concrete molecular structure of phosphazene derivative--

The phosphazene derivative is not particularly limited unless it is liquid at room temperature (25°C), but the cyclic phosphazene of the general formula (4) and the chain phosphazene of the general formula (13) are preferable because they can advantageously release the phosphoric ester as previously mentioned.

In the general formula (4), the monovalent group or the halogen atom in $R^4$ is not particularly limited. As the monovalent group, mention may be made of an alkoxy group, an alkyl group, a carboxyl group, an acyl group, an aryl group and the like. As the halogen atom are mentioned, for example, the aforementioned halogen atoms. Among them, the alkoxy group is preferable because it can particularly render the viscosity of the electrolyte into a low level. As the alkoxy group are mentioned, for example, methoxy group, ethoxy group, methoxy-ethoxy group, propoxy group, phenoxy group and the like. Among them, methoxy group, ethoxy group and methoxy-ethoxy group are particularly preferable. In these groups, it is preferable to substitute a hydrogen atom(s) with a halogen atom(s).

In the general formula (13), the monovalent group or the halogen atom in $R^1$, $R^2$ and $R^3$ is not particularly limited. As the monovalent group, mention may be made of an alkoxy group, an alkyl group, a carboxyl group, an acyl group, an aryl group and the like. As the halogen atom are mentioned, for example, the aforementioned halogen atoms. Among them, the alkoxy group is preferable because it can particularly render the viscosity of the electrolyte into a low level. $R^1$ to $R^3$ may be the same group or some of them may be different groups.

As the alkoxy group, mention may be made of methoxy group, ethoxy group, propoxy group, butoxy group and the like; or alkoxy-substituted alkoxy groups such as methoxy-ethoxy group, methoxy-ethoxy-ethoxy group and the like. Among them, all of $R^1$ to $R^3$ are preferable to be methoxy group, ethoxy group, methoxy-ethoxy group or methoxy-ethoxy-ethoxy group. Particularly, all of them are preferable to be methoxy group or ethoxy group in view of low viscosity and high dielectric constant.

As the alkyl group, mention may be made of methyl group, ethyl group, propyl group, butyl group, pentyl group and the like.

As the acyl group, mention may be made of formyl group, acetyl group, propionyl group, butyryl group, isobutyryl group, valeryl group and the like.

As the aryl group, mention may be made. of phenyl group, tolyl group, naphthyl group and the like.

In these groups, it is preferable to substitute a hydrogen atom(s) with a halogen atom(s).

As the group of $Y^1$, $Y^2$ and $Y^3$ in the general formula (13), mention may be made of $CH_2$ group and a group containing an element(s) of oxygen, sulfur, selenium, nitrogen, boron, aluminum, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt, nickel or the like. Among them, $CH_2$ group and the group containing an element(s) of oxygen, sulfur, selenium or nitrogen are preferable. Particularly, $Y^1$, $Y^2$ and $Y^3$ are preferable to contain sulfur and selenium because the combustion inhibiting effect of the electrolyte is considerably improved. All of $Y^1$ to $Y^3$ may be the same, or some of them may be different groups.

X in the general formula (13) is preferable to be a group containing at least one element selected from the group consisting of carbon, silicon, nitrogen, phosphorus, oxygen and sulfur from a viewpoint of care to harmful effect, environment and the like. Particularly, a group having a structure represented by the following general formula (14) is preferable.

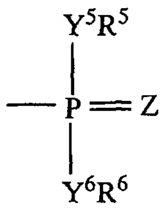
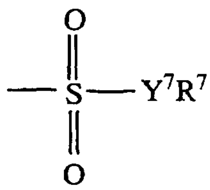
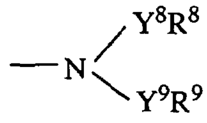
····· (14)

Group (A) Group (B) Group (C)

In the general formula (14), $R^5$ to $R^9$ are a monovalent group or a halogen atom, and $Y^5$ to $Y^9$ are a bivalent connecting group, a bivalent element or a single bond, and Z is a bivalent group or a bivalent element.

As $R^5$ to $R^9$ in the general formula (14) are preferably mentioned the same monovalent groups and halogen atoms as described in $R^1$ to $R^3$ of the general formula (13). Also, they may be the same or different in the same group. Further, $R^5$ and $R^6$ or $R^8$ and $R^9$ may be bonded to each other to form a ring.

As $Y^5$ to $Y^9$ in the general formula (14) are mentioned the same bivalent connecting groups, bivalent groups and the like as described in $Y^1$ to $Y^3$ of the general formula (13). Similarly, the group containing sulfur and selenium is particularly preferable because the combustion inhibiting effect of the electrolyte is considerably improved. In the same group, they may be the same or some of them may be different.

As Z in the general formula (14) are mentioned, for example, $CH_2$ group, CHR group (R is an alkyl group, an alkoxy group, a phenyl group or the like, and the later mentioned R is the same), NR group, a group containing an element(s) of oxygen, sulfur, selenium, boron, aluminum, scandium, gallium, yttrium, indium, lanthanum, thallium, carbon, silicon, titanium, tin, germanium, zirconium, lead, phosphorus, vanadium, arsenic, niobium, antimony, tantalum, bismuth, chromium, molybdenum, tellurium, polonium, tungsten, iron, cobalt, nickel or the like. Among them, $CH_2$ group, CHR group, NR group and the group containing an element(s) of oxygen, sulfur, or selenium are preferable. Particularly, the group containing sulfur and selenium is preferable because the combustion inhibiting effect of the electrolyte is considerably improved.

As the group in the general formula (14), a group containing phosphorus as shown by Group (A) is preferable because the combustion inhibiting effect can be effectively developed. Also, a group containing sulfur as shown by Group (B) is preferable in view of making the interfacial resistance of the electrolyte small.

By properly selecting $R^1$ to $R^9$, $Y^1$ to $Y^3$, $Y^5$ to $Y^9$ and Z in the general formulae (4), (13) and (14), it is possible to synthesize an electrolyte having a more preferable viscosity, a solubility suitable for mixing and the like. These phosphazene derivatives may be used alone or in a combination of two or more.

-- Flash point of combustion inhibiting substance releasing compound --

The flash point of the combustion inhibiting substance releasing compound is not particularly limited, but it is preferably not lower than 100°C, more preferably not lower than 150°C, further preferably not lower than 230°C, and no flash is most preferable from a viewpoint of the control of ignition-combustion and the like. When the combustion inhibiting substance releasing compound has a flash point of not lower than 100°C, the ignition or the like is inhibited, and also even if the ignition is caused in the interior of the battery, it is possible to lower a risk that the ignited flame spreads over the surface of the electrolyte.

Moreover, the flash point means a temperature that the flame spreads on the surface of the substance to cover at least 75% of the substance surface. The flash point is a measure for judging a tendency of forming a combustible mixture with air. In the invention, a value measured by the following miniflash method is used. That is, there is provided an apparatus of a closed cup system provided with a small measuring chamber of 4 ml, a heating cup, a flame, an ignition portion and an automatic flame detecting system (MINIFLASH, made by GRABNR INSTRUMENTS), and then 1 ml of a sample to be measured is put into the heating cup and a cover is placed on the cup and thereafter the heating of the heating cup is started from a position above the cover. As a temperature of the sample is raised at a constant interval, a mixture of steam and air inside the cup is ignited at a constant temperature interval to detect flashing. A temperature when the flashing is detected is recognized as a flash point.

Particularly, the additive for the battery and the electric double-layered capacitor according to the invention is preferable to be added to the non-aqueous electrolyte for the battery or the electric double-layered capacitor.

The amount of the combustion inhibiting substance releasing compound added to the electrolyte is preferable to be an amount corresponding to a preferable numerical range of a content of the combustion inhibiting substance releasing compound in a battery or an electric double-layered capacitor according to the invention as mentioned later. By adjusting the addition amount to the value corresponding to the numerical range can be preferably given the combustion inhibiting effect to the electrolyte.

[Battery]

The battery according to the invention comprises an electrolyte, a positive electrode and a negative electrode and may include other parts, if necessary.

- Positive electrode for battery -

The material for the positive electrode is not particularly limited and can be used by properly selecting from well-known materials for the positive electrode. For example, there are mentioned metal oxides such as $V_2O_5$, $V_6O_{13}$, $MnO_2$ $MoO_3$, $LiCoO_2$, $LiNiO_2$, $LiMn_2O_4$ and the like; metal sulfide such as $TiS_2$, $MoS_2$ and the like; conductive polymers such as polyaniline and the like. Among them, $LiCoO_2$, $LiNiO_2$ and $LiMn_2O_4$ are particularly preferable because they are high in the capacity and safety and excellent in the wettability to the electrolyte. These materials may be used alone or in a combination of two or more. The shape of the positive electrode is not particularly limited and can be properly selected from well-known shapes as an electrode. For example, there are mentioned a sheet, a column, a plate, a spiral and the like.

- Negative electrode for battery -

The negative electrode is able to occlude and release lithium, lithium ion or the like. Therefore, the material for the negative electrode is not particularly limited unless it can occlude and release lithium or lithium ion, and can be used by properly selecting from well-known materials for negative electrode. For instance, there are mentioned lithium-containing materials such as lithium metal itself, an alloy of lithium with aluminum, indium, lead, zinc or the like; carbon material such as graphite doped with lithium, and so on. Among them, the carbon material such as graphite or the like is preferable in view of a higher safety. These materials may be used alone or in a combination of two or more. The shape of the negative electrode is not particularly limited and can be properly selected from well-known shapes likewise the shape of the positive electrode.

- Electrolyte for battery -

The electrolyte comprises the additive for battery according to the invention and a support salt and may contain other components, if necessary.

The electrolyte is preferable to release the combustion inhibiting substance in an amount of at least 0.03 (mol/1 kg of electrolyte), preferably 0.05-0.5 (mol/1 kg of electrolyte) during combustion. When the releasing amount of the combustion inhibiting substance is less than 0.03 (mol/1 kg of electrolyte), the combustion inhibiting effect of the electrolyte is insufficient.

The electrolyte is not particularly limited, but is preferable to be a non-aqueous electrolyte in view of the safety and the like.

The electrolyte is preferable to contain at least 20% by volume of the combustion inhibiting substance releasing compound. When the content is less than 20% by volume, the combustion inhibiting substance such as phosphoric ester or the like is not sufficiently released and the electrolyte does not develop the sufficient combustion inhibiting effect.

Moreover, the electrolyte is preferable to contain at least 30% by volume of the combustion inhibiting substance releasing compound. When the content is not less than 30% by volume, the combustion inhibiting substance such as phosphoric ester or the like is sufficiently released and the electrolyte can develop the sufficient combustion inhibiting effect.

Moreover, the upper limit of the content of the combustion inhibiting substance releasing compound in the electrolyte is not particularly limited. For example, 100% by volume of the electrolyte may be the above phosphazene derivative.

As the combustion inhibiting substance releasing compound, the phosphazene derivative is preferable because it can preferably release the combustion inhibiting substance. Particularly, the phosphazene derivatives of the general formula (4) or (13) are preferable.

-- Support salt in electrolyte for battery --

As the support salt, it is preferable to be an ion source for the lithium ion. The ion source for the lithium ion is not particularly limited and includes, for example, lithium salts such as $LiClO_4$, $LiBF_4$, $LiPF_6$, $LiCF_3SO_3$, $LiAsF_6$, $LiC_4F_9SO_3$, $Li(CF_3SO_2)_2N$, $Li(C_2F_5SO_2)_2N$ and the like. They may be used alone or in a combination of two or more.

The amount of the support salt compounded in the electrolyte is preferably 0.2-1 mol, more preferably 0.5-1 mol per 1 kg of the electrolyte (solvent component). When the compounding amount is less than 0.2 mol, the sufficient electric conductivity of the electrolyte can not be ensured and troubles may be caused in the discharge-recharge cycling property of the battery, while when it exceeds 1 mol, the viscosity of the electrolyte rises and the sufficient mobility of the lithium ion or the like can not be ensured and hence the sufficient electric conductivity of the electrolyte can not be ensured likewise the above case and troubles may be caused in the discharge-recharge cycling property of the battery.

-- Other components in the electrolyte for battery --

As the other component desirably included in the electrolyte, an aprotic organic solvent is particularly preferable in view of the safety. When the aprotic organic solvent is included in the electrolyte, the high safety can be obtained without reacting with t he material for the negative electrode. Also, it is possible to lower the viscosity of the electrolyte and an optimum ion conductivity as a battery can be easily attained.

The aprotic organic solvent is not particularly limited, but includes ether compounds, ester compounds and the like in view of lowering the viscosity of the electrolyte. Concretely, there are mentioned 1,2-dimethoxy ethane, tetrahydrofuran, dimethyl carbonate, diethyl carbonate, diphenyl carbonate, ethylene carbonate, propylene carbonate, γ-butyrolactone, γ-valerolactone, ethylmethyl carbonate and so on. Among them, cyclic ester compounds such as ethylene carbonate, propylene carbonate, γ-byturolactone and the like; chain ester compounds such as dimethyl carbonate, ethylmethyl carbonate, diethyl carbonate and the like; and chain ether compounds such as 1,2-dimethoxy ethane and the like are preferable. Particularly, the cyclic ester compound is preferable in view that the dielectric constant is high and the solubility of lithium salt or the like is excellent, and the chain ester compound and ether compound are preferable in view that the viscosity of the electrolyte is lowered because they are low in the viscosity. They may be used alone or in a combination of two or more, but the combination of two or more is preferable.

The viscosity at 25°C of the aprotic organic solvent is not particularly limited, but it is preferably not more than 10 mPa · s (10 cP), more preferably not more than 5 mPa · s (5 cP).

Particularly, the electrolyte is preferable to contain the combustion inhibiting substance releasing compound, $LiPF_6$ and either ethylene carbonate or propylene carbonate. In this case, even if the content of the combustion inhibiting substance releasing compound in the electrolyte is small irrespectively of the aforementioned description, the electrolyte has excellent self-extinguishing and flame retardant effects. Therefore, the content of the combustion inhibiting substance releasing compound in the electrolyte is preferable to be 1.5-2.5% by volume for developing the self-extinguishing property of the electrolyte. Also, the content is preferable to be more than 2.5% by volume for developing the flame retardance of the electrolyte.

- Other members for battery -

As the other member for the battery is mentioned a separator interposed between the positive and negative electrodes for preventing the occurrence of short-circuiting of current due to contact of these electrodes.

A material for the separator is a material capable of surely preventing the contact of both the electrodes and passing or impregnating the electrolyte, which preferably includes non-woven fabric, thin layer film and the like of a synthetic resin such as polytetrafluoroethylene, polypropylene, polyethylene or the like. Among them, a microporous film made of polypropylene or polyethylene having a thickness of about 20-50 μm is particularly preferable.

In addition to the separator, well-known members usually used in the battery are mentioned as the other member.

A conformation of the battery according to the invention is not particularly limited, but preferably includes various well-known forms such as cylindrical batteries of coin type, button type, paper type, rectangle or spiral structure and the like. In case of the spiral structure, a battery can be manufactured, for example, by preparing a sheet-shaped positive electrode, sandwiching a collector between the positive electrodes, piling negative electrodes (sheet-shaped) thereon and then spirally winding them or the like.

Also, the form of the battery according to the invention is not particularly limited and may be a primary cell or a secondary cell.

As mentioned above, the battery according to the invention is excellent in the combustion inhibiting effect because the aforementioned additive for battery is added. Also, it is low in the interfacial resistance of the electrolyte while maintaining cell characteristics and the like required as the battery and has excellent low-temperature discharge property and high-temperature storing property. Therefore, the battery according to the invention is useful as a battery having a high discharge capacity even under severe temperature conditions, and is particularly very useful as a battery for various automobiles requiring cell performances after the storing under a high temperature environment for a long time.

In the invention, the term "low-temperature discharge property" is evaluated by measuring a reducing ratio

of discharge capacity as mentioned below.

<Low-temperature discharge property>

At first, a discharge capacity (25°C) is measured after the discharge-recharge cycling of 50 cycles is conducted at 25°C under conditions of upper limit voltage: 4.5 V, lower limit voltage: 3.0 V, discharge current: 100 mA and recharge current: 50 mA.
Thereafter, a discharge capacity (-10 or -30°C) is measured in the same manner as mentioned above after the discharge-recharge cycling of 50 cycles is repeated by changing a temperature in the discharge to -10 or -30°C.
The low-temperature discharge property is evaluated by calculating a reducing ratio of discharge capacity according to the following equation when the latter discharge capacity (-10 or -30°C) is compared with the discharge capacity (25°C).

$$\text{Reducing ratio of discharge capacity} = 100 - (\text{discharge capacity } (-10 \text{ or } -30°C) / \text{discharge capacity } (25°C)) \times 100\ (\%)$$

Also, the term "high-temperature storing property" in the invention is evaluated as follows.

<High-temperature storing property: measurement and evaluation of discharge property at room temperature after high-temperature test (storing)>

After the battery is stored at 80°C for 10 days, a discharge properties at room temperature (25°C) (discharge capacity (mAh/g), average discharge voltage (V) and the like) are measured. Also, a value of internal resistance (Ω, 25°C, 1 kHz impedance) at 50% discharge depth (state of discharging 50% of full capacity) is measured in the measurement and evaluation of the discharge properties.

[Electric double-layered capacitor]

The electric double-layered capacitor according to the invention comprises an electrolyte, a positive electrode and a negative electrode and may include other members, if necessary.

- Positive electrode of electric double-layered capacitor-

The positive electrode is not particularly limited, but it is usually preferable to be a carbon-based polar electrode. As the polar electrode is preferable an electrode having large specific surface area and bulk specific gravity and being electrochemically inert and low in the resistance and the like. The polar electrode is not particularly limited, but it is generally an activated carbon and contains other components such as an electric conducting agent, a binder and the like, if necessary.

-- Activated carbon as positive electrode of electric double-layered capacitor --

A material of the activated carbon is not particularly limited, but there are preferably mentioned various heat-resistant resins, pitches and the like in addition to phenolic resins.
As the heat-resistant resin, mention may be preferably made of polyimide, polyamide, polyamideimide, polyether imide, polyether sulphone, polyether ketone, bismaleimide triazine, aramide, fluorine resin, polyphenylene, polyphenylene sulfide and the like. They may be used alone or in a combination of two or more.
The activated carbon used in the positive electrode is preferable to be a form of powder, fibrous cloth or the like for making a specific surface area high and a charging capacity of a non-aqueous electrolyte electric double-layered capacitor large. Further, the activated carbon may be subjected to a heat treatment, a drawing shaping, a high-temperature treatment under vacuum, a rolling or the like for making the charging capacity of the non-aqueous electrolyte electric double-layered capacitor higher.

-- Other components in positive electrode of electric double-layered capacitor (electric conducting agent, binder) --

The electric conducting agent is not particularly limited, but includes graphite, acetylene black and the like.
A material of the binder is not particularly limited, but includes polyvinylidene fluoride, polytetrafluoroethylene

and the like.

- Negative electrode of electric double-layered capacitor-

As the negative electrode is preferably mentioned the same polar electrode as in the positive electrode.

- Electrolyte of electric double-layered capacitor-

The electrolyte comprises an additive for electric double-layered capacitor according to the invention and a support salt and contains other components, if necessary.

It is preferable that the electrolyte release at least 0.03 (mol/1 kg of electrolyte) of a combustion inhibiting substance, preferably 0.05-0.5 (mol/1 kg of electrolyte) of a combustion inhibiting substance during combustion. When the releasing amount of the combustion inhibiting substance is less than 0.03 (mol/1 kg of electrolyte), the combustion inhibiting effect of the electrolyte may not become sufficient.

The electrolyte is not particularly limited, but it is preferable to be a non-aqueous electrolyte in view of the safety and the like.

The electrolyte is preferable to contain at least 20% by volume of the combustion inhibiting substance releasing compound. When the content is less than 20% by volume, the combustion inhibiting substance such as phosphoric ester or the like is not sufficiently released and the sufficient combustion inhibiting effect of the electrolyte may be not developed.

Preferably, the electrolyte contains at least 30% by volume of the combustion inhibiting substance releasing compound. When the content is not less than 30% by volume, the combustion inhibiting substance is sufficiently released and the sufficient combustion inhibiting effect of the electrolyte is developed.

Moreover, the upper limit of the content of the combustion inhibiting substance releasing compound in the electrolyte is not particularly limited, but 100% by volume of the electrolyte may be the phosphazene derivative.

As the combustion inhibiting substance releasing compound, phosphazene derivatives are preferable because they can advantageously release the combustion inhibiting substance. Particularly, the phosphazene derivative of the general formula (4) or (13) is preferable.

-- Support salt of electrolyte in electric double-layered capacitor --

The support salt can be selected from conventionally well-known ones, but a quaternary ammonium salt is preferable in view that an electric conductivity in the electrolyte is good and the like. The quaternary ammonium salt is a solute playing a role as an ion source for forming an electric double layer in the electrolyte and is possible to effectively improve electric characteristics such as electric conductivity of electrolyte and the like, so that a quaternary ammonium salt capable of forming a polyvalent ion is preferable.

As the quaternary ammonium salt, mention may be preferably made of $(CH_3)_4N \cdot BF4$, $(CH_3)_3C_2H_5N \cdot BF_4$, $(CH_3)_2(C_2H_5)_2N \cdot BF_4$, $CH_3(C_2H_5)_3N \cdot BF4$, $(C_2H_5)_4N \cdot BF_4$, $(C_3H_7)_4N \cdot BF_4$, $CH_3(C_4H_9)_3N \cdot BF_4$, $(C_4H_9)_4N \cdot BF_4$, $(C_6H_{13})_4N \cdot BF_4$, $(C_2H_5)_4N \cdot ClO_4$, $(C_2H_5)_4N \cdot BF4$, $(C_2H_5)_4N \cdot PF_6$, $(C_2)H_5)_4N \cdot AsF_6$, $(C_2H_5)_4N \cdot SbF_6$, $(C_2H_5)_4N \cdot CF_3SO_3$, $(C_2H_5)_4N \cdot C_4F_9SO_3$, $(C_2H_5)_4N \cdot (CF_3SO_2)_2N$, $(C_2H_5)_4N \cdot BCH_3(C_2H_5)_3$, $(C_2H_5)_4N \cdot B(C_2H_5)_4$, $(C_2H_5)_4N \cdot B(C_4H_9)_4$, $(C_2H_5)_4N \cdot B(C_6H_5)_4$ and the like. Also, a hexafluorophosphate of these quaternary ammonium salt may be used. Further, the solubility can be improved by making a polarization ratio large, so that there may be used a quaternary ammonium salt in which different alkyl groups are bonded to N atom.

As the above quaternary ammonium salt are preferably mentioned compounds represented by the following structural formulae (1) to (10) and so on.

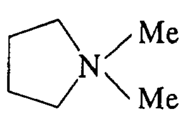 $BF_4$ · · · · · (1)

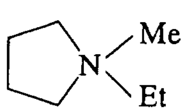 $BF_4$ · · · · · (2)

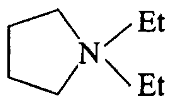 $BF_4$ ····· (3)

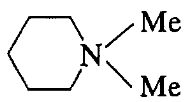 $BF_4$ ····· (4)

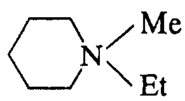 $BF_4$ ····· (5)

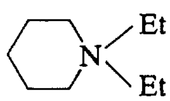 $BF_4$ ····· (6)

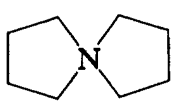 $BF_4$ ····· (7)

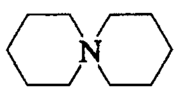 $BF_4$ ····· (8)

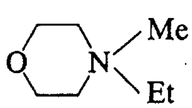 $BF_4$ ····· (9)

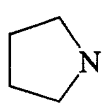 $BF_4$ ····· (10)

In the above formulae, Me is a methyl group and Et is an ethyl group.

Among these quaternary ammonium salts, salts capable of generating $(CH_3)_4N^+$, $(C_2H_5)_4N^+$ or the like as a cation are particularly preferable in view of ensuring a high electric conductivity.

These quaternary ammonium salts may be used alone or in a combination of two or more.

The amount of the support salt compounded is preferably 0.2-1.5 mol, more preferably 0.5-1.0 mol per 1 kg of the electrolyte (solvent component). When the compounding amount is less than 0.2 mol, the electric characteristics of the electrolyte such as electric conductivity and the like can not be sufficiently ensured, while when it exceeds 1.5 mol, the viscosity of the electrolyte rises and the electric characteristics such as electric conductivity and the like lower.

-- Other components of electrolyte in electric double-layered capacitor --

As the other component desirably included in the electrolyte, an aprotic organic solvent is particularly preferable in view of the safety. When the aprotic organic solvent is included in the electrolyte, the high safety can be obtained without reacting with the material of the negative electrode. Further, it is possible to lower the viscosity of the electrolyte, so that an optimum ion conductivity as the electric double-layered capacitor can be easily attained.

The aprotic organic solvent is not particularly limited, but includes ether compounds, ester compounds and the like in view of lowering the viscosity of the electrolyte. Concretely, there are mentioned 1,2-dimethoxy ethane, tetrahydrofuran, dimethyl carbonate, diethyl carbonate, diphenyl carbonate, ethylene carbonate, propylene carbonate, γ-butyrolactone, γ-valerolactone, ethylmethyl carbonate and so on. Among them, cyclic ester compounds such as ethylene carbonate, propylene carbonate, γ-byturolactone and the like; chain ester compounds such as dimethyl carbonate, ethylmethyl carbonate, diethyl carbonate and the like; and chain ether compounds such as 1,2-dimethoxy ethane and the like are preferable. Particularly, the cyclic ester compound is preferable in view that the dielectric constant is high and the solubility of lithium salt or the like is excellent, and the chain ester compound and ether compound are preferable in view that the viscosity of the electrolyte is lowered because they are low in the viscosity. They may be used alone or in a combination of two or more, but the combination of two or more is preferable.

The viscosity at 25°C of the aprotic organic solvent is not particularly limited, but it is preferably not more than 10 mPa · s (10 cP), more preferably not more than 5 mPa · s (5 cP).

Particularly, the electrolyte is preferable to contain propylene carbonate. In this case, even if the content of the combustion inhibiting substance releasing compound in the electrolyte is at least 3% by volume irrespectively of the aforementioned description, the electrolyte has an excellent combustion inhibiting effect.

- Other members in electric double-layered capacitor -

As the other member are mentioned a separator, a collector, a vessel and the like.

The separator is interposed between the positive and negative electrodes for the purpose of preventing the short-circuiting of the electric double-layered capacitor and the like. The separator is not particularly limited, but preferably uses the well-known separators usually used as a separator in the electric double-layered capacitor. As a material thereof are mentioned, for example, non-woven fabric, thin layer film and the like, each of which is made of a synthetic resin such as polytetrafluoroethylene, polypropylene, polyethylene or the like. Among them, a microporous film of polypropylene or polyethylene having a thickness of about 20-50 μm is particularly preferable.

The collector is not particularly limited, but well-known ones usually used as a collector in the electric double-layered capacitor are preferably used. The collector is preferable to be excellent in the electrochemically corrosion resistance, chemically corrosion resistance, workability and mechanical strengths and low in the cost, and is, for example, a collector layer or the like of aluminum, stainless steel, conductive resin or the like.

The vessel is not particularly limited, but well-known ones usually used as a vessel in the electric double-layered capacitor are preferably mentioned. As a material of the vessel, aluminum, stainless steel, conductive resins and the like are preferable.

In addition to the separator, collector and vessel, various well-known members usually used in the electric double-layered capacitor are preferably mentioned as the other member.

A form of the electric double-layered capacitor according to the invention is not particularly limited, but there are preferably mentioned well-known forms such as cylinder type (column, square), flat type (coin) and the like.

Such an electric double-layered capacitor is preferably used for backing-up memories in various electron equipments, industrial equipments, airplane equipments and the like; for electromagnetically holding toys, cordless equipments, gas equipments, instantaneous water boiler and the like; as a power source for wristwatch, wall clock, solar watch, AGS wristwatch and the like; and so on.

The aforementioned electric double-layered capacitor according to the invention is excellent in the combustion inhibiting effect while maintaining sufficient electric characteristics such as electric conductivity and the like, and low in the interfacial resistance of the non-aqueous electrolyte and excellent in the low-temperature properties.

The invention will be described in detail with reference to examples and comparative examples, but the examples are not intended as limitations.

(Example 1)

[Preparation of electrolyte in battery]

To 80 ml of a mixed solvent of diethyl carbonate and ethylene carbonate (mixing ratio (by volume): diethyl carbonate/ethylene carbonate = 1/1) (aprotic organic solvent) is added 20 ml (20% by volume) of a phosphazene

derivative (cyclic phosphazene derivative, i.e. compound of the general formula (4), in which n is 3 and two of six $R^4$s are ethoxy groups and remaining four thereof are fluorines provided that two ethoxy groups are bonded to different phosphorus atoms)(additive for battery) and further $LiClO_4$ (support salt) is dissolved in a concentration of 0.75 mol/kg to prepare an electrolyte (non-aqueous electrolyte).

- Evaluation of combustion inhibiting effect (self-extinguishing property, flame retardance and non-combustibility) -

With respect to the thus obtained electrolyte are conducted the measurement and evaluation in the same manner as in the aforementioned "Evaluation Method". The results are shown in Table 1.

<Measurement on amount of phosphoric ester generated (released)>

In the evaluation of the combustion inhibiting effect, the amount of phosphoric ester generated in the combustion of the electrolyte is measured by the following method. The result is also shown in Table 1.

- Measuring Method -

The electrolyte impregnated in a non-combustible quartz sheet is ignited by a flame temperature of 800°C in a combustion chamber (30×30×30 cm) and a gas generated is adsorbed on a gas catching tube (filled with TenaxTA) to conduct analysis through TDS-GC-MS. As to GC-MS analyzing conditions, GC uses a DB-5 column (30 m, 0.25 mm I.D.) and a film of 0.25 μm, and the analysis is conducted at a column temperature of 40-300°C (rate: 25°C/m). Moreover, a measuring mass range of MS is 5-500.

[Preparation of battery]

A thin layer-shaped positive electrode sheet having a thickness of 100 μm and a width of 40 mm is prepared by using cobalt oxide represented by a chemical formula of $LiCoO_2$ as an active substance for a positive electrode, adding 10 parts of acetylene black (conductive assistant) and 10 parts of Teflon® binder (binding resin) per 100 parts of $LiCoO_2$, milling them in an organic solvent (mixed solvent of 50/50% by volume of ethyl acetate/ethanol) and rolling through rolls.

Thereafter, an aluminum foil (collector) of 25 μm in thickness coated on its surfaces with a conductive adhesive is inserted between two obtained positive electrode sheets and a lithium metal foil of 150 μm in thickness is piled thereon through a separator of 25 μm in thickness (microporous film of polypropylene) and then they are wound up to prepare cylinder type electrode assembly. In the cylinder type electrode assembly, a length of the positive electrode is about 260 mm.

The above electrolyte is poured into the cylinder type electrode assembly and sealed to prepare a size AA lithium battery (non-aqueous electrolyte secondary cell).

<Measurement and evaluation of cell characteristics>

With respect to the thus obtained battery, initial cell characteristics (voltage, internal resistance) are measured and evaluated, and then the discharge-recharge cycling property is measured and evaluated by the following evaluation method and further the low-temperature discharge property and high-temperature storing property are measured and evaluated as previously mentioned. These results are shown in Table 1.

- Evaluation of discharge-recharge cycling property -

The discharge-recharge cycling of 50 cycles is conducted under conditions of upper limit voltage: 4.5 V, lower limit voltage: 3.0 V, discharge current: 100 mA and recharge current: 50 mA. A capacity reducing ratio after 50 cycles is calculated by comparing a value of discharge-recharge capacity with an initial value of discharge-recharge capacity. The same measurement and evaluation as mentioned above are repeated with respect to three batteries and an average value is calculated as an evaluation of the discharge-recharge cycling property.

(Example 2)

An electrolyte is prepared in the same manner as in Example 1 except that the addition amount of the phosphazene derivative in "Preparation of electrolyte" of Example 1 is changed into 30% by volume, and the evaluation of the combustion inhibiting effect and the like are conducted. Also, a battery is prepared in the same manner as in

Example 1, and then the initial cell characteristics (voltage, internal resistance), discharge-recharge cycling property, low-temperature discharge property and high-temperature storing property are measured and evaluated. The results are shown in Table 1.

(Example 3)

An electrolyte is prepared in the same manner as in Example 1 except that the addition amount of the phosphazene derivative in "Preparation of electrolyte" of Example 1 is changed into 3% by volume and $LiPF_6$ (support salt) is used instead of $LiCoO_4$ (support salt), and the evaluation of the combustion inhibiting effect and the like are conducted. Also, a battery is prepared in the same manner as in Example 1, and then the initial cell characteristics (voltage, internal resistance), discharge-recharge cycling property, low-temperature discharge property and high-temperature storing property are measured and evaluated. The results are shown in Table 1.

(Comparative Example 1)

An electrolyte is prepared in the same manner as in Example 1 except that the addition amount of the phosphazene derivative in "Preparation of electrolyte" of Example 1 is changed into 0% by volume, and the evaluation of the combustion inhibiting effect and the like are conducted. Also, a battery is prepared in the same manner as in Example 1, and then the initial cell characteristics (voltage, internal resistance), discharge-recharge cycling property, low-temperature discharge property and high-temperature storing property are measured and evaluated. The results are shown in Table 1.

Table 1

| | Evaluation of combustion inhibiting effect | Amount of phosphoric ester generated (mol/1 g non-aqueous electrolyte) | Phosphoric ester generated | Initial voltage (V) | Initial internal resistance (Ω) | Evaluation of discharge-recharge cycling property (%) | Low-temperature discharge property (capacity reducing ratio %) | | High-temperature storing property | | | |
|---|---|---|---|---|---|---|---|---|---|---|---|---|
| | | | | | | | -10°C | -30°C | Discharge capacity (mAh/g) | Average discharge voltage (V) | Discharge capacity ratio (%) | Value of internal resistance (Ω, 25°C, 1 kHz, impedance) |
| Example 1 | self-extinguishing property | 0.22 | $P(O)(OCH_2CH_3)_3$ | 2.8 | 0.1 | 3 | 32 | 45 | 140 | 4.1 | 100 | 52.9 |
| Example 2 | flame retardance | 0.34 | $P(O)(OCH_2CH_3)_3$ | 2.8 | 0.13 | 4 | 35 | 50 | 135 | 4.12 | 96 | 70.6 |
| Example 3 | flame retardance | 0.03 | $P(O)(OCH_2CH_3)_3$ | 2.8 | 0.08 | 3 | 28 | 34 | 145 | 4.15 | 104 | 32.8 |
| Comparative Example 1 | combustibility | 0 | - | 2.8 | 0.08 | 3 | 80 | 92 | 96 | 4.02 | 68 | 100.4 |

In Examples 1 to 3, phosphoric ester is released in the combustion of the electrolyte, and hence the combustion inhibiting effect of the electrolyte is excellent and further both of the low-temperature discharge property and high-temperature storing property are excellent.

(Example 4)

[Preparation of electrolyte in electric double-layered capacitor]

To 80 ml of γ-butyrolactone (aprotic organic solvent) is added 20 ml (20% by volume) of a phosphazene derivative (cyclic phosphazene derivative, i.e. compound of the general formula (4), in which n is 3 and two of six $R^4$s are ethoxy groups and remaining four thereof are fluorines provided that two ethoxy groups are bonded to different phosphorus atoms)(additive for electric double-layered capacitor), and further tetraethyl ammonium fluoroborate $(C_2H_5)_4N \cdot BF_4$ (quaternary ammonium salt) is dissolved in a concentration of 0.75 mol/kg to prepare an electrolyte (non-aqueous electrolyte), and the evaluation of the combustion inhibiting effect and the like are conducted in the same manner as in Example 1. The results are shown in Table 2.

[Preparation of positive electrode and negative electrode (polar electrodes)]

A mixture is obtained by mixing an activated carbon (trade name: Kuractive-1500, made by Kuraray Chemical Co., Ltd.), acetylene black (conductive agent) and polytetrafluoroethylene (PTFE) (binder) at a mass ratio (activated carbon/acetylene black/PTFE) of 8/1/1.
100 mg of the thus obtained mixture is weighed and placed into a carbon pressure vessel of 20 mmϕ and shaped at room temperature under a pressure of 150 kgf/cm$^2$ to prepare positive electrode and negative electrode (polar electrodes).

[Preparation of electric double-layered capacitor]

A cell is assembled by using the thus obtained positive electrode and negative electrode, an aluminum plate (collector)(thickness: 0.5 mm) and a polypropylene/polyethylene plate (separator)(thickness: 25 μm), which is sufficiently dried under vacuum.
The above electrolyte is impregnated into the cell to prepare an electric double-layered capacitor.

<Measurement of electric conductivity in electric double-layered capacitor>

An electric conductivity is measured by using a conductivity meter (trade name: CDM210, made by Radiometer Trading Co., Ltd.) while applying a constant current of 5 mA to the thus obtained electric double-layered capacitor. The result is shown in Table 2.
Moreover, the electric conductivity at 25°C of not less than 5.0 mS/cm in the electric double-layered capacitor is no problem level in practical use.

(Example 5)

An electrolyte is prepared in the same manner as in Example 4 except that the addition amount of the phosphazene derivative in "Preparation of electrolyte" of Example 4 is changed into 80% by volume, and the evaluation of the combustion inhibiting effect and the like are conducted. Also, an electric double-layered capacitor is prepared in the same manner as in Example 4, and then the electric conductivity is measured and evaluated. The results are shown in Table 2.

(Example 6)

An electrolyte is prepared in the same manner as in Example 4 except that propylene carbonate is used instead of γ-butyrolactone and the addition amount of the phosphazene derivative in "Preparation of electrolyte" of Example 4 is changed into 3% by volume, and the evaluation of the combustion inhibiting effect and the like are conducted. Also, an electric double-layered capacitor is prepared in the same manner as in Example 4, and then the electric conductivity is measured and evaluated. The results are shown in Table 2.

(Comparative Example 2)

An electrolyte is prepared in the same manner as in Example 4 except that the addition amount of the phosphazene derivative in "Preparation of electrolyte" of Example 4 is changed into 0% by volume, and the evaluation of the combustion inhibiting effect and the like are conducted. Also, an electric double-layered capacitor is prepared in the same manner as in Example 4, and then the electric conductivity is measured and evaluated. The results are shown in Table 2.

Table 2

| | Evaluation of combustion inhibiting effect | Amount of phosphoric ester generated (mol/1 g non-aqueous electrolyte) | Phosphoric ester generated generated | Electric conductivity (mS/cm) |
|---|---|---|---|---|
| Example 4 | self-extinguishing property | 0.25 | $P(O)(OCH_2CH_3)_3$ | 7.9 |
| Example 5 | flame retardance | 0.92 | $P(O)(OCH_2CH_3)_3$ | 6.8 |
| Example 6 | flame retardance | 0.03 | $P(O)(OCH_2CH_3)_3$ | 8.5 |
| Comparative Example 2 | combustibility | 0 | - | 8.3 |

In Examples 4 to 6, phosphoric ester is released in the combustion of the electrolyte, so that the combustion inhibiting effect of the electrolyte is excellent and hence the electric double-layered capacitors according to the invention are high in the safety.

INDUSTRIAL APPLICABILITY

According to the invention, there can be provided an additive for a battery capable of fabricating a battery having an excellent combustion inhibiting effect, a low interfacial resistance of an electrolyte and excellent low-temperature discharging property and high-temperature storing property by adding to the electrolyte for the battery to maintain properties required as the battery as well as a battery containing the additive for the battery and having an excellent combustion inhibiting effect, a low interfacial resistance of an electrolyte and excellent low-temperature discharging property and high-temperature storing property.

And also, according to the invention, there can be provided an additive for an electrolyte electric double-layered capacitor capable of fabricating an electrolyte electric double-layered capacitor having an excellent combustion inhibiting effect, a low interfacial resistance of an electrolyte and an excellent low-temperature discharging property by adding to the electrolyte for the electric double-layered capacitor to maintain sufficient electric properties such as electric conductivity and the like as well as an electric double-layered capacitor containing the additive for the electric double-layered capacitor and having an excellent combustion inhibiting effect, a low interfacial resistance of an electrolyte and an excellent low-temperature discharging property.

## Claims

1. An additive for a battery **characterized by** containing a combustion inhibiting substance releasing compound which releases a combustion inhibiting substance during combustion.

2. An additive for a battery according to claim 1, wherein the combustion inhibiting substance is at least one of a self-extinguishing substance, a flame-retardant substance and a non-combustible substance.

3. An additive for a battery according to claim 1 or 2, wherein the combustion inhibiting substance is a phosphoric ester.

4. An additive for a battery according to any one of claims 1 to 3, wherein the combustion inhibiting substance releasing compound is at least one of a homocyclic phosphorus compound, a heterocyclic phosphorus compound, a homo-chain phosphorus compound and a hetero-chain phosphorus compound, each containing a phosphorus atom.

5. An additive for a battery according to any one of claims 1 to 4, wherein the combustion inhibiting substance releasing compound is at least one homocyclic phosphorus compound selected from alkoxy cyclophosphine derivatives, trialkoxy cyclophosphine derivatives and alkoxy cyclophosphine oxide derivatives.

6. An additive for a battery according to any one of claims 1 to 4, wherein the combustion inhibiting substance releasing compound is a cyclic phosphazene derivative.

7. An additive for a battery according to any one of claims 1 to 4, wherein the combustion inhibiting substance releasing compound is at least one homo-chain phosphorus compound selected from dialkoxy phosphine derivatives and trialkoxy phosphine derivatives.

8. An additive for a battery according to any one of claims 1 to 4, wherein the combustion inhibiting substance releasing compound is at least one hetero-chain phosphorus compound selected from alkoxy diphosphinoborane derivatives, alkoxysilaphosphane derivatives, alkoxyphosphoarsenic cyclosilazane derivatives, alkoxyphosphoxide borane derivatives, p-dialkoxyphosphine borane derivatives, p-trialkoxyphosphine borane derivatives and chain phosphazene derivatives.

9. An additive for a battery according to any one of claims 1 to 8, wherein the combustion inhibiting substance releasing compound is a compound having a halogen atom(s) in its molecule.

10. An additive for a battery according to claim 9, wherein a content of the halogen atom(s) in the combustion inhibiting substance releasing compound is 2-80% by weight.

11. A battery comprising a positive electrode, a negative electrode and an electrolyte containing an additive for a battery as claimed in any one of claims 1 to 10 and a support salt.

12. A battery according to claim 10, wherein the electrolyte releases at least 0.03 (mol/1 kg of electrolyte) of a combustion inhibiting substance during combustion.

13. A battery according to claim 11 or 12, wherein the electrolyte contains at least 20% by volume of a combustion inhibiting substance releasing compound.

14. A battery according to any one of claims 11 to 13, wherein the electrolyte contains at least 30% by volume of a combustion inhibiting substance releasing compound.

15. A battery according to any one of claims 11 to 14, wherein the electrolyte contains an aprotic organic solvent.

16. A battery according to claim 15, wherein the aprotic organic solvent is a cyclic or chain ester compound, or a chain ether compound.

17. A battery according to any one of claims 11 to 16, comprising a positive electrode, a negative electrode and an electrolyte containing at least one of $LiPF_6$, ethylene carbonate and propylene carbonate and more than 2.5% by volume of a combustion inhibiting substance releasing compound.

18. A battery according to any one of claims 11 to 16, comprising a positive electrode, a negative electrode and an electrolyte containing at least one of $LiPF_6$, ethylene carbonate and propylene carbonate and 1.5-2.5% by volume of a combustion inhibiting substance releasing compound.

19. A battery according to any one of claims 11 18, wherein the electrolyte is a non-aqueous electrolyte.

20. An additive for an electric double-layered capacitor **characterized by** containing a combustion inhibiting substance releasing compound which releases a combustion inhibiting substance during combustion.

21. An additive for an electric double-layered capacitor according to claim 20, wherein the combustion inhibiting substance is at least one of a self-extinguishing substance, a flame-retardant substance and a non-combustible substance.

22. An additive for an electric double-layered capacitor according to claim 20 or 21, wherein the combustion inhibiting

substance is a phosphoric ester.

**23.** An additive for an electric double-layered capacitor according to any one of claims 20 to 22, wherein the combustion inhibiting substance releasing compound is at least one of a homocyclic phosphorus compound, a heterocyclic phosphorus compound, a homo-chain phosphorus compound and a hetero-chain phosphorus compound, each containing a phosphorus atom.

**24.** An additive for an electric double-layered capacitor according to any one of claims 20 to 23, wherein the combustion inhibiting substance releasing compound is at least one homocyclic phosphorus compound selected from alkoxy cyclophosphine derivatives, trialkoxy cyclophosphine derivatives and alkoxy cyclophosphine oxide derivatives.

**25.** An additive for an electric double-layered capacitor according to any one of claims 20 to 23, wherein the combustion inhibiting substance releasing compound is a cyclic phosphazene derivative.

**26.** An additive for an electric double-layered capacitor according to any one of claims 20 to 23, wherein the combustion inhibiting substance releasing compound is at least one homo-chain phosphorus compound selected from dialkoxy phosphine derivatives and trialkoxy phosphine derivatives.

**27.** An additive for an electric double-layered capacitor according to any one of claims 20 to 23, wherein the combustion inhibiting substance releasing compound is at least one hetero-chain phosphorus compound selected from alkoxy diphosphinoborane derivatives, alkoxysilaphosphane derivatives, alkoxyphosphoarsenic cyclosilazane derivatives, alkoxyphosphoxide borane derivatives, p-dialkoxyphosphine borane derivatives, p-trialkoxyphosphine borane derivatives and chain phosphazene derivatives.

**28.** An additive for an electric double-layered capacitor according to any one of claims 20 to 27, wherein the combustion inhibiting substance releasing compound is a compound having a halogen atom(s) in its molecule.

**29.** An additive for an electric double-layered capacitor according to claim 28, wherein a content of the halogen atom (s) in the combustion inhibiting substance releasing compound is 2-80% by weight.

**30.** An electric double-layered capacitor comprising a positive electrode, a negative electrode and an electrolyte containing an additive for a battery as claimed in any one of claims 20 to 29 and a support salt.

**31.** An electric double-layered capacitor according to claim 30, wherein the electrolyte releases at least 0.03 (mol/1 kg of electrolyte) of a combustion inhibiting substance during combustion.

**32.** An electric double-layered capacitor according to claim 30 or 31, wherein the electrolyte contains at least 20% by volume of a combustion inhibiting substance releasing compound.

**33.** An electric double-layered capacitor according to any one of claims 30 to 32, wherein the electrolyte contains at least 30% by volume of a combustion inhibiting substance releasing compound.

**34.** An electric double-layered capacitor according to any one of claims 30 to 33, wherein the electrolyte contains an aprotic organic solvent.

**35.** An electric double-layered capacitor according to claim 34, wherein the aprotic organic solvent is a cyclic or chain ester compound, or a chain ether compound.

**36.** An electric double-layered capacitor according to any one of claims 30 to 35, comprising a positive electrode, a negative electrode and an electrolyte containing propylene carbonate and at least 3% by volume of a combustion inhibiting substance releasing compound.

## INTERNATIONAL SEARCH REPORT

International application No.
PCT/JP02/03010

A. CLASSIFICATION OF SUBJECT MATTER
Int.Cl⁷ H01M10/40, H01G9/038

According to International Patent Classification (IPC) or to both national classification and IPC

B. FIELDS SEARCHED

Minimum documentation searched (classification system followed by classification symbols)
Int.Cl⁷ H01M10/40, H01G9/038

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2000-30740 A (Toyota Central Research And Development Laboratories, Inc.), 28 January, 2000 (28.01.00), Claim 1; Par. Nos. [0019] to [0023] (Family: none) | 1 |
| X | US 5830600 A (SRI International), 03 November, 1998 (03.11.98), Claim 10; column 21, lines 37 to 48 (Family: none) | 1 |
| X | JP 6-13108 A (Bridgestone Corp.), 21 January, 1994 (21.01.94), Claim 3; Par. Nos. [0021] to [0024], [0033] (Family: none) | 1 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 June, 2002 (25.06.02) | 23 July, 2002 (23.07.02) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP02/03010

C (Continuation). DOCUMENTS CONSIDERED TO BE RELEVANT

| Category* | Citation of document, with indication, where appropriate, of the relevant passages | Relevant to claim No. |
|---|---|---|
| X | WO 00/33410 A1 (The Nippon Chemical Industrial Co., Ltd.), 08 June, 2000 (08.06.00), Claims 1 to 4; page 9, line 6 to page 10, line 15 (Family: none) | 1 |

Form PCT/ISA/210 (continuation of second sheet) (July 1998)

## INTERNATIONAL SEARCH REPORT

International application No.
PCT/JP02/03010

**Box I Observations where certain claims were found unsearchable (Continuation of item 1 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 2 of first sheet)**

This International Searching Authority found multiple inventions in this international application, as follows:

(See extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1

**Remark on Protest** ☐ The additional search fees were accompanied by the applicant's protest.
☐ No protest accompanied the payment of additional search fees.

Form PCT/ISA/210 (continuation of first sheet (1)) (July 1998)

**INTERNATIONAL SEARCH REPORT**

International application No.
PCT/JP02/03010

Continuation of Box No.II of continuation of first sheet(1)

In order that a group of inventions described in claims satisfy the requirement of unity of invention, there must exist a special technical feature for so linking the group of inventions as to form a single general inventive concept. The inventions of claims 1-36 relate to a cell or an electric double-layered capacitor and are linked in regard to "relating to an additive containing a combustion inhibitor emission compound which emits a combustion inhibitor during combustion". This subject matter is disclosed in the prior-art documents such as

Document 1: JP 2000-30740 A (Toyota Central Research And Development Laboratories, Inc.) 2000. 01. 28, [claim 1], [0019]-[0023]
Document 2: US 5830600 A (SRI INTERNATIONAL) 1998. 11. 03, claim 10, column 21. lines 37-48
Document 3: JP 6-13108 A (Bridgestone Corp.) 1994. 01. 21, [claim 3], [0021]-[0024], [0033]
Document 4: WO 00/33410 A1 (Nihon Chemical Industrial Co., Ltd.) 2000. 06. 08, [claim 1]-[claim 4], line 6, page 9 to line 15, page 10.,

and therefore cannot be a special technical feature.

Thus, there exists no special technical feature for so linking as to form a single general inventive concept among the inventions of claims 1-36. Therefore, it is clear that the group of inventions of claims 1 -36 do not satisfy the requirement of unity of invention.

The number of groups of inventions, i.e., the number of inventions so linked as to form a general inventive concept of claims of this international application will be examined.

The inventions of claims 1-10, claims 11-20, claims 20-29, and claims 30-36 involve the technical features of an additive for a cell which contains a combustion inhibitor emission compound, a cell comprising the additive, an additive for an electric double-layered capacitor which contains a combustion inhibitor emission compound, and an electric double-layered capacitor comprising the additive, respectively, and are thereby so linked as to form a single general inventive concept.

The inventions of claim 1 and claims 2-9 referring to claim 1 are linked in regard to relating to an additive for a cell containing a combustion inhibitor emission compound. This subject matter is disclosed in prior-art documents 1-4, and therefore cannot be a special technical feature. Consequently they are different inventions. The inventions of claim 9 and claims 10 referring to claim 9 are linked in regard to a combustion inhibitor emission compound having a halogen element in its molecule. This subject matter is disclosed in prior-art documents 1-4, and therefore cannot be a special technical feature. Consequently they are different inventions.

The inventions of claim 1 and claims 11-19 are linked in regard to relating an additive for a cell containing a combustion inhibitor emission compound and a cell containing the additive. This subject matter is disclosed in prior-art documents 1-4, and therefore cannot be a special technical feature. Consequently they are different inventions.

The inventions of claim 11 and claims 12-15 and 17-19 referring to claim 11 are linked in regard to relating an additive for a cell containing a combustion inhibitor emission compound and a cell having an electrolyte containing a support salt, a positive electrode, and a negative electrode. This subject matter is disclosed in prior-art documents 1-4, and therefore cannot be a special technical feature. Consequently they are different inventions. The inventions of claim 15 and claim 16 referring to claim 15 are linked in regard to relating an electrolyte

(continued to extra sheet)

Form PCT/ISA/210 (extra sheet) (July 1998)

**INTERNATIONAL SEARCH REPORT**

International application No.
PCT/JP02/03010

Continuation of Box No.II of continuation of first sheet(1)

that contains an aprotic inorganic solvent. This subject matter is disclosed in prior-art documents 1-4, and therefore cannot be a special technical feature.

Consequently they are different inventions.

The inventions of claims 1 and claims 20-36 are linked in regard to relating an additive containing a combustion inhibitor emission compound. This subject matter is disclosed in prior-art documents 1-4, and therefore cannot be a special technical feature. Consequently they are different inventions.

The inventions of claims 20-36 involve the technical features of an additive for an electric double-layered capacitor containing a combustion inhibitor emission compound and an electric double-layered capacitor containing the additive, and are thereby so linked as to form a single general inventive concept.

The claims of this international application define 20 inventions divided into groups of inventions of claims 1, 2, 3, 4, 5, 6, 7, 8, 9, 10, 11, 12, 13, 14, 15, 16, 17, 18, 19, 20-36.

Form PCT/ISA/210 (extra sheet) (July 1998)